# EUROPEAN PATENT APPLICATION

(11) **EP 4 427 715 A1**
(43) Date of publication of application: **11.09.2024**
(21) Application number: 23305327.1
(22) Date of filing: 10.03.2023
(51) Int. Cl.: A61F 13/00, C08L 67/02, C09J 167/00, B32B 27/36

(54) **(CO)POLYESTER RESIN-BASED HOT MELT ADHESIVE COMPOSITION SUITABLE FOR HYGIENE APPLICATIONS**

(71) Applicant: Bostik SA, 92700 Colombes (FR)
(72) Inventor: PUTHUSSERY, James, WAUWATOSA, 53226 (US); SECRIST, Kimberly, WAUWATOSA, 53226 (US); PUTHANPARAMBIL, Deepa, WAUWATOSA, 53226 (US); HARJU, Joshua, WAUWATOSA, 53226 (US)
(74) Representative: Arkema Patent

(57) **Abstract**

A hot melt adhesive composition comprises a plasticizer having at least one ester linkage and a (co)polyester resin component either: (1) having an essentially amorphous domain and a crystalline domain or (2) comprising a blend of at least one essentially amorphous (co)polyester resin and at least one semicrystalline or crystalline (co)polyester resin, and preferably is compostable. The composition has a Tg of less than about 10°C, a DSC melt temperature of between about 20°C and about 80°C, an intrinsic viscosity of between about 0.3 dl/g and about 0.8 dl/g, and a melt viscosity of between about 2,000 and about 50,000 cP at 300°F. The composition may be applied, including by being sprayed, at typical application temperatures in the hygiene field and is suitable for use as a construction adhesive with non-woven substrates for disposable hygiene products, such as baby diapers or adult incontinence products.

## Description

### FIELD OF THE INVENTION

This invention relates to a hot melt adhesive composition based on (co)polyester resins suitable for a variety of applications, including disposable hygiene products, such as baby diapers, adult incontinent articles, and feminine hygiene pads. Preferably, the adhesive is compostable.

### BACKGROUND OF THE INVENTION

Hot melt adhesives typically exist as a solid mass at ambient temperature and can be converted to a flowable liquid by the application of heat. These adhesives are particularly useful in manufacturing a variety of disposable goods in which bonding of various substrates is often necessary. Specific applications include disposable diapers, hospital pads, feminine sanitary napkins, panty shields, surgical drapes and adult incontinent briefs, collectively known as disposable nonwoven hygiene products. In most of these applications, the hot melt adhesive is heated to its molten state and then applied to a substrate, often named the primary substrate. A second substrate, often named the secondary substrate, is then brought into contact with and joined against the first to create a laminate structure. The adhesive solidifies on cooling to form a strong bond. The major advantage of hot melt adhesives is the absence of a liquid carrier, as would be the case of waterborne or solvent-based adhesives, thereby eliminating the costly process and time associated with solvent removal.

Challenges are faced when developing hot melt adhesives that are suitable for use in disposable nonwoven hygiene products. One such challenge involves the nature of substrates used in such products. For example, the back sheet of many such products, including many diapers, is often one which has a low surface energy creating difficulty in bonding. One such material is polyethylene. Another substrate used in many such products is a nonwoven layer, often functioning to absorb body fluids, such as urine, or to retain absorbent (or super absorbent) particles for doing so. Another challenge is the speed at which such diapers are made which can be in excess of 500 meters per minute.

One type of adhesive in a disposable nonwoven hygiene product is known as a construction adhesive, which serves to bond the layers of materials needed to support the product's structure and integrity. Construction adhesives typically need a minimum of an appropriate level of peel strength with relatively low quantities of adhesive. Depending on an adhesive's function and location, the amount of adhesive may be as low as 25 grams per square meter (gsm). Certain applications require even lower amounts of adhesive, such as less than 15 gsm or 10 gsm. In some application, it is preferred to refrain from inhibiting the flexibility of the substrate, which requires adhesive quantities as low as 6 gsm or even lower than 1 gsm.

In a diaper, there may be upwards of a dozen applications for construction adhesives. Each can have its own criteria for application and performance. Typical roles of construction adhesives include, but are not limited to: Helping prevent core shifting; holding an acquisition distribution layer in place; bonding materials to prevent shifting; fixing the frontal tape; fixing the top sheet to a cuff; bonding the backsheet nonwoven to the barrier film; and assuring the end seal bonding.

Another challenge in formulating hot melt adhesives for use in disposable nonwoven hygiene products is that the adhesive must be able to be easily processed at the application temperature and under other conditions. This usually requires a particular viscosity or range of viscosities at the application temperature and conditions. In many cases, it is desirable to spray a hot melt adhesive onto a substrate. A sprayable hot melt adhesive is one that can be sprayed under the conditions of a system with sufficient accuracy and precision such that the adhesive (or a sufficiently high percentage of it) lands in the precise location on the substrate where intended. Several indirect or noncontact coating methods, through which a hot melt adhesive can be spray-coated with the aid of heated, compressed air onto a substrate from a distance, may be used. These non-contact coating techniques include conventional spiral spray, Omega^{™}, Surewrap^{™}, and various forms of melt-blown methods. In many cases, the indirect method, however, requires that the viscosity of the adhesives must be sufficiently low, usually in the range of 2,000 to 30,000 cP, preferably in the range of 2,000 to 15,000 cP, at the application temperature in order to obtain an acceptable coating pattern. However, depending on the desired end product, the adhesive may also be applied using direct coat methods, such as slot or comb coating. Direct application of a hot adhesive to a thinner substrate is not desirable as it can result in substrate deformation or destruction. Hence, it may be desirable to have an adhesive that can be sprayed indirectly and also bond to the secondary substrate at a given open time. Many other physical factors, especially the rheological properties of the adhesive, come into play in determining the sprayability of a hot melt adhesive. The majority of commercial hot melt adhesive products do not lend themselves to spray applications. There are no universally accepted theoretical models or guidelines to predict sprayability, which must be determined empirically with application equipment.

In sum, desirable construction adhesives provide a unique combination of properties which previous hot melt adhesives had failed to offer, including good wet-out properties, a relatively broad application temperature range, good green bond strength, a more environmentally friendly end of life prospect, and suitability with essentially all known hot melt coating methods, including spray techniques. It would be especially advantageous for the adhesive to maintain adequate peel strength during application and through use by the end consumer, but readily disintegrate when specific end-of-life conditions are met.

Hot melt adhesives have traditionally been based on petroleum based polymers. Thermoplastics have been used as the polymer component of hot melt adhesives, which generally fall into three types: (1) petroleum-based polymers, such as polyethylene, polypropylene, ethylene-vinyl acetate, styrene block copolymers (e.g. styrene isoprene styrene, styrene butadiene styrene); (2) polyurethanes; and (3) polyester/polycarbonate materials. Many of these products have the disadvantage of poor environmental degradability. It would be useful if a hot melt adhesive composition could be formulated primarily or even entirely with compostable ingredients and was itself compostable.

U.S. Patent Application Publication No. 2020/0079981 is directed to a compostable hot melt adhesive comprising a polylactide homopolymer or copolymer, such as polylactic acid; sulfonated copolyester; and at least one plasticizer. The plasticizer may be a solid plasticizer, such as a benzoate, and a second plasticizer may also be used. The adhesive is suitable for use in a variety of applications, such as case and carton applications, use with burlap or other compostable substrates for tree bulbs or plant seeds, and use with other compostable films, and is especially appropriate for dual walled paperboard beverage cups. The adhesive demonstrates good bond performance comparable to non-compostable adhesives over a range of temperatures, reflective of the temperatures of hot and cold beverages.

U.S. Patent Application Publication No. 2022/0098446 is directed to compostable hot melt adhesive compositions that can have pressure sensitive adhesive properties. The hot melt adhesive composition includes from 15% by weight to 60% by weight of a polyester polymer selected from a group consisting of a polylactic acid-based polymer (PLA) and polyhydroxy alkanoate (PHA)-based polymer and greater than 30% by weight to 85% by weight, greater than 40% by weight to 85% by weight, or even greater than 50% by weight to 85% by weight of a polyester plasticizer having a weight average molecular weight (Mw) as tested by SEC of no greater than 10,000 daltons.

U.S. Patent Application Publication No. 2021/0298961 describes a biodegradable, compostable diaper and its manufacture. The application provides little direction or concern to the adhesive that would be holding the components together, such as a construction adhesive. If a non-compostable adhesive is used with the compostable diaper described therein, such adhesive would need to be physically removed due to its lack of compostability before composting the diaper. Therefore, a compostable adhesive would help facilitate a way for disposable products to not need further alteration prior to disposal via composting.

There remains a strong need for hot melt adhesive compositions which have adequate peel strength and a suitable rheological behavior allowing them to be sprayed in typical coaters used in the hygiene industry. Preferably, such adhesives are compostable in order to conserve landfill space and thereby protect, restore, and promote sustainable use of terrestrial ecosystems and provide sustainable production and consumption patterns. When the adhesive is used with a compostable substrate, it may be possible to allow the entire assembled article to be composted, after appropriate sterilization measures have been taken.

### SUMMARY OF THE INVENTION

It would be advantageous to provide a hot melt adhesive that will overcome the shortcomings of the prior art adhesives mentioned above. Accordingly, the present invention provides a hot melt adhesive composition comprising:
a (co)polyester resin component either: (1) having an essentially amorphous domain and a crystalline domain or (2) comprising a blend of at least one essentially amorphous (co)polyester resin and at least one semicrystalline or crystalline (co)polyester resin; and
a plasticizer having at least one ester linkage;
wherein the composition has:
   a Tg (ASTM E1356-08) less than about 10°C (preferably between about -50°C and about 0°C, more preferably between about -40°C and about -7.5°C, and most preferably between about -30°C and about -10°C);
   a DSC melt temperature (Tₘ ASTM D3418-21, first heat) of between about 20°C and about 80°C (preferably between about 25°C and about 70°C, and most preferably between about 30°C and about 60°C );
   an intrinsic viscosity (ASTM D5225-14, using a 60/40 blend of phenol and tetrachloroethane at a temperature of 30°C) between about 0.3 dl/g and about 0.8 dl/g (preferably between about 0.35 and about 0.5 dl/g, and most preferably between about 0.4 and about 0.5 dl/g); and
   a melt (Brookfield) viscosity of between about 2,000 and about 50,000 cP (preferably between about 3,000 and about 40,000 cP, more preferably between about 5,000 and about 30,000 cP, and most preferably between about 5,000 and about 25,000 cP) at 300°F in accordance with ASTM method D3236-15.

Unless otherwise stated, standards mentioned throughout the present application are those in effect on the date the application is filed.

In accordance with another embodiment of the invention, a method of making a laminate comprises the steps of applying the hot melt adhesive composition of any embodiment of the invention in a molten state to a primary substrate and mating a secondary substrate to the primary substrate by contacting the secondary substrate with the adhesive composition. The adhesive, upon cooling, bonds the first substrate and the second substrate together. Embodiments of the current invention also include a laminate made by a method according to embodiments of the invention. Such laminates may include a nonwoven substrate bonded to a polyethylene film for use in a disposable article, and such laminates in which both the adhesive and the nonwoven substrate are compostable. Embodiments of the invention have a suitably low viscosity at a given application temperature to permit application to a substrate by spraying yet provide an adequate peel force to serve as a construction adhesive in a disposable nonwoven hygiene product.

### BRIEF DESCRIPTION OF THE DRAWING

The present invention may be understood more readily by reference to the attached drawing, in which:

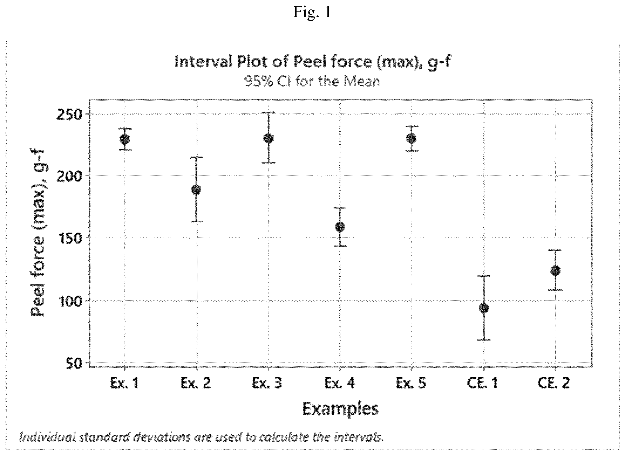

Fig. 1 is an interval plot of the maximum load achieved by laminates made using inventive hot melt adhesive formulations according to Examples 1-5 and formulations according to Comparative Examples 1 and 2.

### DETAILED DESCRIPTION OF THE INVENTION

The term "(co)polyester" is understood to mean a synthetic oligomer or polymer prepared by the reaction of at least one or more difunctional carboxylic acids or esters (i.e., diacids or diesters) with one or more difunctional hydroxyl compounds (i.e., diols), and is generic to both polyesters and copolyesters. A polyester is the reaction product of one diacid or diester with one diol, whereas a copolyester is the reaction product of multiple diacids or diesters with one diol, multiple diols with one diacid or diester, or multiple diacids or diesters with multiple diols. Additional monomers may be used in the formation of (co)polyesters, such as trifunctional hydroxyl compounds.

The term "reaction product" or "residue" as used herein refers to any product of an esterification or transesterification reaction of any of the monomers used in making the (co)polyester, including a (co)polyester polymer, reacted to certain intrinsic and melt viscosities. The term "reaction product" also includes a reacted monomer formed *in situ* by the reaction of other monomers which may become part of the (co)polyester backbone. Typically, the relative amounts of the monomer residues making up the (co)polyester product are the same as or very similar to the relative amounts of the monomers used in the charge to make the product. In some conditions, however, other monomers are formed during the production of the (co)polyester and such formed monomers may become part of the final product. When ethylene glycol is used, for example, some amount of diethylene glycol may be formed at a low level *in situ* and its residue may become part of the (co)polyester backbone, as is known in the art.

As used herein, an essentially amorphous (co)polyester resin is a (co)polyester resin that has essentially no evidence of crystallinity or none at all as characterized by DSC, against a highly crystalline polypropylene standard. An essentially amorphous (co)polyester resin may have a degree of crystallization of less than 2%, less than 1%, less than 0.5%, less than 0.1%, or less than 0.05% to and including 0%, as determined by DSC against a highly crystalline polypropylene standard. An essentially amorphous (co)polyester resin may have heat of fusion of less than 1.5 Joules/gram, preferably less than 1 Joules/gram, more preferably less than 0.5 Joules/gram, and most preferably near or at zero Joules/gram. Crystalline (co)polyester resins are those materials which have a well arranged crystalline phase throughout. Semi-crystalline (co)polyester resins are those materials which have a well arranged crystalline phase embedded within a more random amorphous domain. The ordered crystalline sites impart the properties such as toughness and opacity to the resin. Semi-crystalline (co)polyester resins have a degree of crystallinity of 30 % or less as determined by DSC, against a highly crystalline polypropylene standard, and a heat of fusion value of greater than 2.5 Joules/gram and up to 50 Joules/gram, more preferably greater than 5 Joules/gram and up to 30 Joules/gram, and most preferably greater than 7.5 Joules/gram and up to 25 Joules/gram. Heat of fusion values provided herein are determined according to ASTM D3418-21 "Standard Test Method for Transition Temperatures and Enthalpies of Fusion and Crystallization of Polymers by Differential Scanning Calorimetry." As is known in the art, heat of fusion values are typically obtained and reported as the values obtained upon the second heat of the sample, but for slowly crystallizing copolyester resins for which no melting transitions may be observed in the second heat by using the standard method (such as the semicrystalline copolyester resins and plasticizers used in the Examples below), the blends may be heated to 190°C for 10 minutes to establish the same thermal history and stored at room temperature for 1 week to allow for crystallization. Testing may then be done by heating the crystallized samples from -110°C to 200°C at a rate of 20°C/minute and the heat of fusion is determined from this run.

As used herein, a (co)polyester resin that is semicrystalline or crystalline (which can also be referred to as "at least semicrystalline") has a degree of crystallinity of at least about 5% (but less than 100% crystalline in the case of a semicrystalline (co)polyester resin), as determined by DSC against a highly crystalline polypropylene standard. Preferably, a semicrystalline (co)polyester resin which has a degree of crystallinity of between about 5% and about 30% is used herein.

The hot melt adhesive composition of the present invention comprises a plasticizer having at least one ester linkage and a (co)polyester resin component. The (co)polyester resin component of the hot melt adhesive composition of the invention either: (1) has an essentially amorphous domain and a crystalline domain or (2) comprises a blend of at least one essentially amorphous (co)polyester resin and at least one semicrystalline or crystalline (co)polyester resin. The hot melt adhesive composition may comprise both a (co)polyester resin component: (1) having an essentially amorphous domain and a crystalline domain and (2) comprising a blend of at least one essentially amorphous (co)polyester resin and at least one semicrystalline or crystalline (co)polyester resin. The hot melt adhesive composition has certain properties which are measured in accordance with the methods of measurement described herein after the entire composition is made. For example, these properties are measured either: (1) after the (co)polyester resin component having an essentially amorphous domain and a crystalline domain is made and/or (2) the blend of the at least one essentially amorphous (co)polyester resin and at least one semicrystalline or crystalline (co)polyester resin is well-mixed, and any other constituents are added to the composition, such as a plasticizer or an antioxidant. The hot melt adhesive composition of the invention has:
a Tg less than about 10°C (preferably between about
   -50°C and about 0°C, more preferably between about -40°C and about
   -7.5°C, and most preferably between about -30°C and about -10°C);
a DSC melt temperature of between about 20°C and about 80°C (preferably in the range of about 25°C and about 70°C, and most preferably in the range of about 30°C and about 60°C);
an intrinsic viscosity between about 0.3 dl/g and about 0.8 dl/g (preferably in the range of about 0.35 and about 0.5 dl/g, and most preferably in the range of about 0.4 and about 0.5 dl/g); and
a melt (Brookfield) viscosity of between about 2,000 and about 50,000 cP (preferably about 3,000 and about 40,000 cP, more preferably about 5,000 and about 35,000 cP) at 300°F.

The glass transition temperature (Tg) values provided herein are determined in accordance with ASTM E1356-08 with a ramp rate of 20°C and the midpoint of the thermal transition being used to determine Tg (i.e., the point on the thermal curve corresponding to half the heat flow difference between the extrapolated onset and extrapolated end and referred to as 'Tm' in ASTM E1356-08). As is known in the art, glass transition temperature values are obtained and reported herein as the values obtained upon the second heat of the sample. The DSC melt temperature values herein are determined in accordance with ASTM 3418-21, with some variation for certain copolyester resins that are known to crystallize slowly as described herein. For copolyester resins that are known to crystallize slowly, namely, for which no melt peak may be observed in the second heat by using the standard method (such as the semicrystalline copolyester resins or plasticizers used for making the blends in the Examples below), the blends may be heated to 190°C for 10 minutes to establish the same thermal history and stored at room temperature for 1 week to allow for crystallization. Testing may then be done by heating the crystallized samples from -110°C to 200°C at a rate of 20°C/minute and the melting point is determined from this run. This was the procedure done for the blends of Examples 1-5. When a material is said to have a DSC melt temperature in a particular temperature range, that may be the only observed DSC melt temperature of that material or the material might have another DSC melt temperature outside of that range. This is likely due to multiple crystalline phases of such material. Nonetheless, the invention encompasses compositions having more than one DSC melt temperature, so long as at least one of them falls within the provided range(s). The intrinsic viscosity values provided herein are determined in accordance with ASTM D5225-14, using a 60/40 blend of phenol and tetrachloroethane at a temperature of 30°C. The melt (Brookfield) viscosity values provided herein are determined in accordance with ASTM D3236-15 with a #27 spindle at rotational speed between about 0.5 and 10 rpm.

According to a preferred feature of the invention, the composition has a Ring and Ball ("R&B") softening point of between about 50°C and about 120°C (preferably, between about 55°C and about 105°C, and more preferably between about 60°C and about 80°C). The R&B softening point values provided herein are determined in accordance with ASTM D36 using glycerin.

According to embodiments of the invention, the (co)polyester resin component has certain properties which are measured in accordance with the methods of measurement described herein either: (1) after the (co)polyester resin component having an essentially amorphous domain and a crystalline domain is made or (2) the blend of the at least one essentially amorphous (co)polyester resin and at least one semicrystalline or crystalline (co)polyester resin is well-mixed, but in the absence of any other constituents, such as plasticizers (including (co)polyester resins whose primary function is plasticizers) or antioxidants. In embodiments of the invention, the (co)polyester resin component has a Tg of between about -10°C and about 58°C, preferably between about -5C and about 30°C, more preferably between about 0°C and about 20°C and most preferably between about 0°C and about 15 °C.

According to preferred features of the invention, the (co)polyester resin component has at least one of or both of the following:
a ring & ball (R&B) softening point value of between about 35°C and about 140°C (preferably in the range of about 45°C and about 120°C; and most preferably in the range of about 50°C and about 100°C); and
an intrinsic viscosity in accordance with ASTM D5225-14 (using a 60/40 blend of phenol and tetrachloroethane at a temperature of 30°C) between about 0.35 dl/g and about 0.65 dl/g (preferably in the range of about 0.4 and about 0.6 dl/g, and most preferably in the range of about 0.45 and about 0.55 dl/g).

According to an embodiment of the invention, the hot melt adhesive composition comprises the (co)polyester resin component and a small molecule plasticizer having at least one ester linkage, and the (co)polyester resin component comprises the blend of the at least one essentially amorphous (co)polyester resin and the at least one semicrystalline or crystalline (co)polyester resin. In this embodiment, the at least one semicrystalline or crystalline (co)polyester resin is a semicrystalline (co)polyester resin having a degree of crystallinity of between about 5 % and about 30 % and has a Tg of at most about 0°C (preferably, at most about -5°C, and more preferably at most about -10°C) and an intrinsic viscosity of between about 0.8 dl/g and about 1.3 dl/g (preferably between about 0.85 dl/g and about 1.2 dl/g, more preferably between about 0.87 dl/g and about 1.15 dl/g). The at least one essentially amorphous (co)polyester resin in this embodiment is an essentially amorphous copolyester resin having a Tg of at least 0°C (preferably, at least about 25°C, more preferably, between about 30°C and about 90°C, and most preferably between about 40°C and about 80°C) and an intrinsic viscosity of between about 0.35 dl/g and about 1 dl/g (preferably between about 0.4 dl/g and about 0.8 dl/g, and most preferably between about 0.45 dl/g and about 0.75 dl/g); and the plasticizer further comprises an essentially amorphous copolyester plasticizer having a Tg of at least 0°C (preferably, at least about 25°C, more preferably between about 30°C and about 60°C, and most preferably between about 35°C and about 55°C) and an intrinsic viscosity of between about 0.1 dl/g and about 0.30 dl/g (preferably between about 0.12 dl/g and about 0.25 dl/g, and most preferably between about 0.15 dl/g and about 0.2 dl/g). The copolyester resins and plasticizer used in this embodiment may have R&B softening points as follows:
the semicrystalline copolyester resin may have an R&B softening point of between about 80°C and about 130°C (preferably, between about 95°C and about 125°C, and most preferably between about 105°C and about 120°C);
the essentially amorphous copolyester resin may have an R&B softening point of between about 85°C and about 180°C (preferably, between about 90°C and about 170°C, and most preferably between about 100°C and about 165°C); and
the essentially amorphous copolyester plasticizer may have an R&B softening point of between about 70°C and about 130°C (preferably, between about 85°C and about 120°C, and most preferably between about 90°C and about 115°C).

In addition, the copolyester resins and plasticizer used in the embodiment described in the preceding paragraph may have weight average molecular weights as follows:
the semicrystalline copolyester resin may have a weight average molecular weight between about 70,000 g/mol and about 150,000 g/mol (preferably between about 75,000 g/mol and about 125,000 g/mol, and most preferably between about 80,000 g/mol and about 120,000 g/mol);
the essentially amorphous copolyester resin may have a weight average molecular weight between about 15,000 g/mol and about 100,000 g/mol (preferably between about 25,000 g/mol and about 80,000 g/mol, and most preferably between about 30,000 g/mol and about 70,000 g/mol); and
the essentially amorphous copolyester plasticizer may have a weight average molecular weight between about 2,000 g/mol and about 25,000 g/mol (preferably between about 4,000 g/mol and about 20,000 g/mol, and most preferably between about 5,000 g/mol and about 15,000 g/mol).

Unless specifically noted otherwise, the weight average molecular weight (Mw) of a polymer (including low molecular weight polymers or resins) as used herein is determined using size exclusion chromatography (SEC) using polystyrene reference standards and tetrahydrofuran as the solvent. This process is used to determine the Mw of all (co)polyester resins and copolyester plasticizers mentioned herein. Low molecular weight versions of the (co)polyester resins may be identified herein with the suffixes "LMW" (which stands for "low molecular weight") or "LV" (which stands for "low viscosity"). As used herein, the term "resin" is intended to encompass all (co)polyester polymers or oligomers described herein, including these lower molecular weight versions but excluding (co)polyester plasticizers as defined below. The number average molecular weight (Mn) of a polymer as used herein is determined using size exclusion chromatography (SEC) using polystyrene reference standards and tetrahydrofuran as the solvent.

In addition, the copolyester resins and plasticizer used in the embodiments described in the preceding paragraphs may each have a polydispersity index (PDI), which is the weight average molecular weight divided by the number average molecular weight (Mw/Mn), as follows:
the semicrystalline copolyester resin may have a polydispersity index (PDI) of between about 1.5 to about 3.5 (preferably between about 1.7 and about 3, and more preferably between about 1.8 and about 2.5);
the essentially amorphous copolyester resin may have a PDI of between about 1.5 and about 3.5 (preferably between about 1.7 and about 3, and more preferably between about 1.8 and about 2.5); and
the essentially amorphous copolyester plasticizer may have a PDI of between about 2 and about 5 (preferably between about 2.3 and about 4, and more preferably between about 2.5 and about 3.5).

The small molecule plasticizer may have a molecular weight at most about 5,000 g/mole, preferably at most about 2,000 g/mol, and even more preferably at most about 1,500 g/mol, and most preferably at most about 1,000 g/mol, and preferably at least about 100 g/mol, more preferably at least about 200 g/mol, and most preferably at least about 250 g/mol. Such plasticizers may include Citroflex^{®} A4 commercially available from Vertellus Greensboro LLC and Hallgreen^{®} R-9010 commercially available from The Hallstar Company. In the embodiments described in the preceding paragraphs, the plasticizers (summing both or all of them) having at least one ester linkage may be present in an amount of between about 25 wt% and about 75 wt% (preferably between about 35 wt% and about 70 wt%, more preferably between about 45 wt% and about 65 wt%) based on the total weight of the hot melt adhesive composition. The small molecule plasticizer having at least one ester linkage may be present in an amount of between about 5 wt% and about 40 wt% (preferably between about 7 wt% and about 35 wt%, more preferably between about 10 wt% and about 30 wt%) based on the total weight of the hot melt adhesive composition.

According to another embodiment of the invention, the hot melt adhesive composition comprises the (co)polyester resin component, which comprises the blend of the at least one essentially amorphous (co)polyester resin and the at least one semicrystalline or crystalline (co)polyester resin; and:
the plasticizer having a least one ester linkage comprises, consists essentially of, or consists of a semicrystalline copolyester plasticizer having a Tg of at most about 35°C C and at least about 10°C (preferably, at most about 30°C, and more preferably at most about 28°C); a degree of crystallinity of between about 5% and about 30% as determined by DSC; and a weight average molecular weight between about 2,000 g/mol and about 25,000 g/mol (preferably between about 4,000 g/mol and about 20,000 g/mol, and most preferably between about 5,000 g/mol and about 15,000 g/mol);
the at least one semicrystalline or crystalline (co)polyester resin comprises a semicrystalline copolyester resin having a Tg of at most about 0°C (preferably, at most about -5°C, and more preferably at most about -10°C); a degree of crystallinity of between about 5% and about 30% as determined by DSC; and a weight average molecular weight between about 70,000 g/mol and about 150,000 g/mol (preferably between about 75,000 g/mol and about 125,000 g/mol, and most preferably between about 80,000 g/mol and about 120,000 g/mol); and
the at least one essentially amorphous (co)polyester resin comprises an essentially amorphous copolyester resin having a Tg of at least 0°C (preferably, at least about 25°C, more preferably, between about 30°C and about 90°C, and most preferably between about 40°C and about 80°C) and a weight average molecular weight between about 15,000 g/mol and about 100,000 g/mol (preferably between about 25,000 g/mol and about 80,000 g/mol, and most preferably between about 30,000 g/mol and about 70,000 g/mol).
In this embodiment, the semicrystalline copolyester plasticizer may be made in the same way and using the same monomers as the semicrystalline copolyester resin, but the reaction during which the copolyester resin is made may simply be stopped earlier to obtain the semicrystalline copolyester plasticizer. In addition, it should be noted that by using a (co)polyester oligomer or polymer as the plasticizer, it has been found that no small molecule plasticizer or other plasticizer is required. The hot melt adhesive of this embodiment comprises, consists essentially of, or consists of a (co)polyester resin component and a (co)polyester plasticizer, optionally with an antioxidant. As used herein, when a composition is said "consist essentially of" certain specified materials, the composition is limited to the specified materials and those that do not materially affect the basic and novel characteristics of thereof.

According to an embodiment of the invention, the hot melt adhesive composition comprises the plasticizer having at least one ester linkage and the (co)polyester resin component comprises the blend of the at least one essentially amorphous (co)polyester resin and the at least one semicrystalline or crystalline (co)polyester resin, and:
the at least one semicrystalline or crystalline (co)polyester comprises a semicrystalline copolyester resin having a Tg of at most about 0°C (preferably, at most about -5°C, and more preferably at most about -10°C); a degree of crystallinity of between about 5% and about 30% as determined by DSC; and a weight average molecular weight between about 70,000 g/mol and about 150,000 g/mol (preferably between about 75,000 g/mol and about 125,000 g/mol, and most preferably between about 80,000 g/mol and about 120,000 g/mol);
the plasticizer having a least one ester linkage comprises a small molecule plasticizer and an essentially amorphous copolyester plasticizer having a Tg of at least 0°C (preferably, at least about 25°C, more preferably, between about 30°C and about 90°C, and most preferably between about 40°C and about 70°C) and a weight average molecular weight between about 2,000 g/mol and about 25,000 g/mol (preferably between about 4,000 g/mol and about 15,000 g/mol, and most preferably between about 5,000 g/mol and about 10,000 g/mol); and
the at least one essentially amorphous (co)polyester resin comprises an essentially amorphous copolyester resin having a Tg of at least 0°C (preferably, at least about 25°C, more preferably, between about 30°C and about 90°C, and most preferably between about 40°C and about 80°C) and a weight average molecular weight between about 15,000 g/mol and about 100,000 g/mol (preferably between about 25,000 g/mol and about 80,000 g/mol, and most preferably between about 30,000 g/mol and about 70,000 g/mol).
In this embodiment, the essentially amorphous copolyester plasticizer may be made in the same way and using the same monomers as the essentially amorphous copolyester resin, but the reaction during which the copolyester resin is made may simply be stopped earlier to obtain the essentially amorphous copolyester plasticizer.

When the (co)polyester resin component comprises the blend of the at least one essentially amorphous (co)polyester resin and the at least one semicrystalline or crystalline (co)polyester resin, the at least one essentially amorphous copolyester resin component may comprise a branched essentially amorphous copolyester resin and a linear essentially amorphous copolyester resin. A branched copolyester resin may be formed by using a trifunctional or higher functional monomer in making the resin, such as a trifunctional acid or ester or a triol. The first essentially amorphous copolyester resin as described herein may be branched, and a second essentially amorphous copolyester resin may be linear, or *vice versa.* In one embodiment, the branched essentially amorphous copolyester resin comprises the residues of at least one diol and at least one triol, wherein the at least one triol is present in an amount of at least about 0.5 mol% (preferably at least about 1 mol%, more preferably at least about 2 mol%) based on the total number of moles of the at least one diol and the at least one triol. Similarly, the essentially amorphous copolyester plasticizer as used herein may be branched or linear and, if branched, may be formed by using a trifunctional or higher functional monomer in making the resin, such as a trifunctional acid or ester or a triol. The branched essentially amorphous copolyester plasticizer may comprise the residues of at least one diol and at least one triol, wherein the at least one triol is present in an amount of at least about 0.5 mol% (preferably at least about 1 mol%, more preferably at least about 2 mol%) based on the total number of moles of the at least one diol and the at least one triol.

The combination of monomers used to make the various (co)polyester resins or plasticizers used in the various embodiments of the invention can be any monomers that form a (co)polyester resin or plasticizer having the properties of such embodiments. When the hot melt adhesive composition comprises the blend of the at least one semicrystalline or crystalline copolyester resin, the essentially amorphous copolyester resin, and the essentially amorphous copolyester plasticizer:
the semicrystalline copolyester resin comprises residues of at least one aliphatic diacid or diester and at least one aromatic diacid or diester and residues of at least one aliphatic diol and preferably has an aromatic diacid or diester:total diacid or diester fraction of at most about 0.65 (preferably at most about 0.55, and most preferably at most about 0.45);
the essentially amorphous copolyester resin comprises residues of at least one aliphatic diol, residues of at least one aromatic diacid or diester, and, optionally, residues of at least one aliphatic diacid or diester and preferably has an aromatic diacid or diester:total diacid fraction of at least about 0.5 (preferably at least about 0.7, and most preferably at least about 0.8); and
the essentially amorphous copolyester plasticizer comprises residues of at least one aliphatic diacid or diester and at least one aromatic diacid or diester and residues of at least one of: (i) at least one aliphatic diol and (ii) at least one aliphatic triol and preferably has an aromatic diacid or diester:total diacid or diester fraction of at least about 0.8 (preferably at least about 0.9, and most preferably at least about 1).

Any suitable (co)polyester resin or plasticizer having the desired properties may be used as constituents of the hot melt adhesive. One line of suitable copolyesters is Vitel^{®} resins or plasticizers, commercially available from the assignee hereof, and others are the Vylon^{®} resins commercially available from Toyobo and Dynapol^{®} resins commercially available from Evonik. For example, Vitel^{®} 1801 and 1901NSB-P resins may serve as a semicrystalline copolyester resins, and Vitel^{®} 2100B, 2200B, and 2700B, and Vylon^{®} 200 and 600 and Dynapol^{®} L952 and L441 may serve as essentially amorphous copolyester resins. Low molecular weight versions of these resins may also be used as part of the (co)polyester resin component, such as Vitel^{®} 2700B-LMW. Provided below at Table 1 are some characteristics of these grades of Vitel^{®} resins.

**Table 1**

| Vitel Grade | Mn | Mw | PDI | Tg (deg C) | RBSP (deg C) |
|---|---|---|---|---|---|
| 1801 | 48000 | 100000 | 2.1 | -23 | 112 |
| 1901NSB-P | 39900 | 80370 | 2.0 | -4 | 143 |
| 2100B | 22000 | 39000 | 1.7 | 66 | 150 |
| 2200B | 22400 | 38840 | 2.1 | 68.6 | 156 |
| 2700B | 31680 | 61740 | 1.9 | 47 | 142 |
| 2700B-LMW | 19000 | 40100 | 2.1 | 46.4 | 115 |

The relative amounts of the various constituents of the hot melt adhesive composition are included in amounts effective for the adhesive to achieve the various properties needed for the desired applications. Advantageously, the (co)polyester resin component and the plasticizer having at least one ester linkage are present in amounts effective to provide a maximum peel strength of at least 150 g-f/inch at 3 gsm when applied and tested under the conditions described in the examples.

When the (co)polyester resin component comprises the blend of the at least one semicrystalline or crystalline copolyester resin and the essentially amorphous copolyester resin and the plasticizer comprises a small molecule plasticizer and an essentially amorphous copolyester plasticizer, the semicrystalline copolyester resin is present in an amount of between about 10 wt% to about 60 wt% (preferably between about 15 wt% to about 50 wt%, more preferably between about 20 wt% to about 45 wt%); the essentially amorphous copolyester resin is present in an amount of between about 2 wt% to about 30 wt% (preferably between about 5 wt% to about 25 wt%, more preferably between about 7 wt% to about 20 wt%); the essentially amorphous copolyester plasticizer is present in an amount of between about 15 wt% to about 70 wt% (preferably between about 25 wt% to about 60 wt%, more preferably between about 30 wt% to about 55 wt%); and the small molecule plasticizer having at least one ester linkage is present in an amount of between about 5 wt% to about 40 wt% (preferably between about 7 wt% to about 35 wt%, more preferably between about 10 wt% to about 30 wt%). Unless otherwise stated herein, all weight percentages are based on the total weight of the adhesive composition. In this embodiments, the weight ratio of the at least one semicrystalline copolyester resin to the essentially amorphous copolyester resin component is advantageously between about 2:1 and about 4:1 (preferably between about 5:2 and about 7:2, and most preferably between about 8:3 and about 10:3).

In embodiments when (i) the plasticizer having a least one ester linkage comprises a semicrystalline copolyester plasticizer, the at least one semicrystalline or crystalline (co)polyester resin comprises a semicrystalline copolyester resin, and the at least one essentially amorphous (co)polyester resin comprises an essentially amorphous copolyester resin or (ii) the at least one semicrystalline or crystalline (co)polyester comprises a semicrystalline copolyester resin, the plasticizer having a least one ester linkage comprises a small molecule plasticizer and an essentially amorphous copolyester plasticizer, and the at least one essentially amorphous (co)polyester resin comprises an essentially amorphous copolyester resin, the constituents may be present in the following amounts:
a) the at least one semicrystalline (co)copolyester resin is present in an amount of between about 10 wt% and about 60 wt% (preferably between about 15 wt% and about 50 wt%, more preferably between about 20 wt% and about 45 wt%);
b) the at least one essentially amorphous (co)polyester resin is present in an amount of between about 3 wt% and about 25 wt% (preferably between about 5 wt% and about 20 wt%, more preferably between about 7 wt% and about 15 wt%); and
c) the plasticizer (either (i) the semicrystalline copolyester plasticizer alone or (ii) the sum of the weight percentages of the small molecule plasticizer and the essentially amorphous copolyester plasticizer) having at least one ester linkage is present in an amount of between about 25 wt% and about 75 wt% (preferably between about 35 wt% and about 70 wt%, more preferably between about 45 wt% and about 65 wt%).
Also in these embodiments, the weight ratio of the at least one semicrystalline or crystalline (co)polyester resin to the essentially amorphous (co)polyester resin component may be between about 6:1 and about 4:5 (preferably between about 5:1 and about 1: 1, and most preferably between about 4:1 and about 2: 1).

The (co)polyester resins or plasticizers used in the present invention may be produced by any conventional method for producing (co)polyester resins, such as by a transesterification method or a direct esterification method. The (co)polyesters used in the present invention typically can be prepared from diacids or diesters and diols which react in substantially equal proportions and are incorporated into the (co)polyesters as their corresponding residues. As is well-known, the diols are added in excess, because unreacted diols are more easily evaporated than unreacted diacids or diesters. The (co)polyesters of the present invention, therefore, can contain substantially equal molar proportions of diacid or diester residues and diol residues. The mole percentages provided in the present disclosure, therefore, may be based on the total moles of diacid and diester residues or the total moles of diol residues.

Suitable methods include, but are not limited to, the steps of reacting one or more dicarboxylic acids with two or more diols at a temperature of 100°C to 315°C at a pressure of 0.1 to 760 mm Hg for a time sufficient to form a polyester. U.S. Pat. No. 3,772,405, incorporated herein by reference, describes suitable methods of producing (co)polyesters. In one process for making the (co)polyester, the process comprises: (I) heating a mixture comprising the selected monomers useful in any of the (co)polyesters of the invention in the presence of a catalyst at a temperature of 150 to 255 C for a time sufficient to produce an initial polyester; (II) heating the initial polyester of step (I) at a temperature of 240 to 320° C for 1 to 4 hours; and (III) removing any unreacted glycols.

Suitable catalysts for use in this process include, but are not limited to, organo-zinc, titanium, or tin compounds. The use of this type of catalyst is well-known in the art. Examples of catalysts useful in the present invention include, but are not limited to, zinc acetate dihydrate, butyltin tris-2-ethylhexanoate, dibutyltin diacetate, titanium (IV) 2-ethylhexyloxide, titanium (IV) butoxide and/or dibutyltin oxide. Other catalysts may include, but are not limited to, those based on manganese, lithium, germanium, and cobalt. In embodiments of the invention, the reaction is continued until the product has the desired melt viscosity or intrinsic viscosity, which will depend on desired molecular weight of the copolyester resin. For example, the reaction might proceed until a melt viscosity at 255°C of between 100,000 and 350,000 cP, preferably between about 125,000 cP to 275,000, is reached. In another embodiment of the invention, the reaction is continued until the product has an intrinsic viscosity of between about 0.1 dl/g to about 0.7 dl/g, preferably between about 0.45 dl/g to about 0.66 dl/g. The reaction is stopped in a known way, for example by stopping the vacuum and heat upon obtaining a measurement of the torque on the agitator which would correspond to the desirable viscosity of the (co)polyester melt. To obtain lower molecular weight (co)polyesters, the reaction would be stopped earlier, namely at a lower viscosity.

A range of monomers may be used to make the various (co)polyesters used as constituents of hot melt adhesives of the present invention. For example, dimethyl terephthalate, terephthalic acid, sebacic acid, isophthalic acid, azelaic acid, or a blend thereof may be used as acids, and ethylene glycol, diethylene glycol, neopentyl glycol, trimethylol propane, or a blend thereof may be used as diols or triols.

According to another embodiment of the invention, the semicrystalline copolyester resin comprises the reaction product of two diacids and one diol. Preferably, the two diacids are terephthalic acid and the sebacic acid, and the diol is ethylene glycol. Preferably, the at least two diacids or diesters are dimethyl terephthalate isophthalic acid, dimethyl isophthalate, or blends thereof. The essentially amorphous copolyester plasticizer may comprise the reaction product of dimethyl terephthalate, isophthalic acid, azelaic acid, ethylene glycol, and neopentyl glycol, and trimethylol propane. The essentially amorphous copolyester resin may comprise the reaction product of dimethyl terephthalate, isophthalic acid, ethylene glycol, and neopentyl glycol or the reaction product of dimethyl terephthalate, sebacic acid, isophthalic acid, and ethylene glycol.

Instead of comprising a blend of at least one essentially amorphous (co)polyester resin and at least one semicrystalline or crystalline (co)polyester resin, the (co)polyester resin component of the hot melt adhesive composition of the invention may be a (co)polyester resin that has an essentially amorphous domain and a crystalline domain. Such (co)polyester resins may be made in a manner described in European Patent No. EP 0 544 844, incorporated herein by reference. For example and as described therein, block copolymers of (co)polyester resins may be obtained via solid state polyaddition reactions of different copolyester resins in the presence of a bifunctional compound (`A') containing groups which react with -COOH and/or -OH groups. The block copolymers have the formula X-A-Y, where X and Y are different domains of a (co)polyester resin component. For example, X may be one of the semicrystalline or crystalline (co)polyester resins described herein (e.g., Vitel^{®} 1801) and Y may be one of the essentially amorphous (co)polyester resins described herein (e.g., Vitel^{®} 2200B). Therefore, a (co)polyester resin component made this way may be deemed to be a (co)polyester resin that has an essentially amorphous domain (Y) and a crystalline domain (X). Preferably, one of X or Y may be configured to react with one reactive end group of A and the other of X or Y may be configured to react with the other reactive group of A in order to maximize the yield X-A-Y, as opposed to one of the homopolymers of X-A-X or Y-A-Y. This can be achieved by providing the diols of X in excess when making X and the diacids or diesters of Y when making Y. A (co)polyester resin having an essentially amorphous domain and a crystalline domain may also be made in accordance with U.S. Patent No. 9,187,213, incorporated herein by reference. This patent describes the use of step-growth linkages to control hard and soft segment ratios. To achieve the different domains, the monomers used in one of the semicrystalline or crystalline (co)polyester resins described herein could be used to make the hard segment and the monomers used in one of the essentially amorphous (co)polyester resins described herein could be used to make the hard segment, and these segments could be joined by step-growth linkages.

The hot melt adhesive composition comprises the plasticizer having at least one ester linkage along with the (co)polyester resin component. The plasticizer having at least one ester linkage functions primarily as a plasticizer, namely it, when added to a material, increases the material's plasticity, decreases its viscosity, decreases its glass transition temperature, and/or decreases friction during its handling. The hot melt adhesive composition of the present invention may comprise, consist essentially of, or consist of the plasticizier having at least one ester linkage and the (co)polyester resin component. The hot melt adhesive composition of the present invention may comprise at least 95%, 98%, 99%, 99.5%, or 100% by weight of the plasticizier having at least one ester linkage and the (co)polyester resin component and, optionally, the antioxidant.

The plasticizer having at least one ester linkage could be a small molecule, an oligomer, or a polymer. An example of a small molecule plasticizer having at least one ester linkage is Citroflex^{®} A4 having the chemical name acetyltri-n-butyl citrate and commercially available from Vertellus Greensboro LLC, and having the following structure (I):

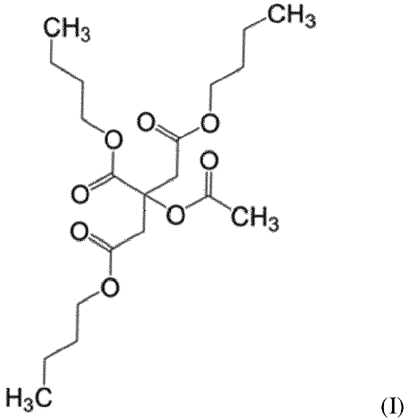

This compound has four ester linkages, but other compounds can be used, including those having between 1 and 10, preferably between 2 and 8, and more preferably between 2 and 6 ester linkages. Anther suitable small molecule plasticizer having at least one linkage is Hallgreen^{®} R-9010 commercially available from The Hallstar Company. Another small molecule plasticizer may be bis (octadecyl) sebacate. The small molecule plasticizer having at least one ester linkage may have a molecular weight of at most about 5,000 g/mol (preferably at most about 2,000 g/mol, and even more preferably at most about 1,500 g/mol, and most preferably at most about 1,000 g/mol, and preferably at least about 100 g/mol, more preferably at least about 200 g/mol, and most preferably at least about 250 g/mol). As will be recognized, when the compound is a small molecule, it will have a single molecular weight but, when it is an oligomer or a polymer, its molecular weight will be understood to be its weight average molecular weight. The plasticizer (including the sum of the weight percentages of all plasticizers present) having at least one ester linkage may be present in an amount of between about 5 wt% and about 75 wt% (preferably between about 7 wt% and about 70 wt%, more preferably between about 10 wt% and about 65 wt%) based on the total weight of the hot melt adhesive composition. When present in the form of a small molecule plasticizer, the plasticizer having at least one ester linkage may be present in an amount of between about 5 wt% and about 40 wt% (preferably between about 7 wt% and about 35 wt%, more preferably between about 10 wt% and about 30 wt%) based on the total weight of the hot melt adhesive composition.

This plasticizer is different from any of the constituents used as the (co)polyester resin component, which do not function primarily as a plasticizer. For purposes herein of distinguishing between a compound which is a (co)polyester polymer or oligomer as a (co)polyester resin component or a plasticizer having at least one ester linkage: (1) any such compound having a Mw of at least 25,000 g/mol shall be deemed a (co)polyester resin; and (2) any such compound having a Mw of less than 25,000 g/mol shall be deemed to be: (a) a copolyester plasticizer if it reduces the melt viscosity of a material at 300°F by at least 25% when the plasticizer amount is 50 wt% of the total weight of the plasticized composition or (b) a (co)polyester resin (and thus a resin component) if it does not reduce the melt viscosity of a material at 300°F by at least 25% when the plasticizer amount is 50 wt% of the plasticized composition. The melt viscosity of the plasticized material would be measured against the material without: (i) the compound itself, (ii) any material known to be a plasticizer, and (iii) any other compound which is a (co)polyester having an Mw of less than 25,000 g/mol and, if the material is a mixture, the amounts of the remaining constituents of the mixture (after constituents (i) through (iii) are excluded) would be increased in the same relative ratios to be 100% of the mixture. As can be appreciated, a single material might meet this definition of a plasticizer when combined with one material or mixture but not when combined with another. Examples of oligomeric or polymeric plasticizers having at least one ester linkage include Stepanpol^{®} polyester polyol, commercially available from Stepan Company, and the Vitel^{®} copolyesters shown below in Table 2.

It has been found that a low molecular weight version of Vitel^{®} 1801 (referred to herein as Vitel^{®} 1801LV) may serve as a semicrystalline copolyester plasticizer and a low molecular weight versions of Vitel^{®} 2200B (referred to herein as Vitel^{®} 2200LV) may serve as an essentially amorphous copolyester plasticizer. Also, Vitel^{®} 5833, which has a relatively low molecular weight, has also been found to serve primarily as a plasticizer in some mixtures. Certain characteristics of Vitel^{®} 1801LV, 2200LV, and 5833 are shown below in Table 2. It should be noted that the `LV' versions of Vitel^{®} 1801 and 2200B function primarily as plasticizers as defined herein, whereas the `LMW' version of Vitel^{®} 2700B functions as a polymer improving the formulation's maximum peel strength due to its higher molecular weight. When in the form of an oligomer or polymer, the plasticizer having at least one ester linkage may have a weight average molecular weight between about 2,000 g/mol and about 25,000 g/mol (preferably between about 4,000 g/mol and about 20,000 g/mol, and most preferably between about 5,000 g/mol and about 15,000 g/mol). As is well-known, whether a compound functions primarily as a plasticizer depends not merely on its molecular weight but also on other factors, such as a compound's rigidity, which is affected by its aromatic content, for example. When in the form of an oligomer or polymer, the plasticizer having at least one ester linkage may be present in an amount of between about 25 wt% and about 75 wt% (preferably between about 35 wt% and about 70 wt%, more preferably between about 45 wt% and about 65 wt%).

**Table 2**

| Vitel Grade | Mn | Mw | PDI | Tg (deg C) |
|---|---|---|---|---|
| 1801LV | 3150 | 9150 | 2.9 | -24.6 |
| 2200LV | 3630 | 6900 | 1.9 | 54.6 |
| 5833B | 3300 | 10200 | 3.1 | 48 |

The hot melt adhesive composition may also comprise an anti-oxidant or combination of anti-oxidants. If used, an anti-oxidant, such as a hindered phenol, is present in an amount effective to prevent oxidation or stabilize the adhesive and in embodiments is present in an amount of between about 0.1 and about 1 % by weight, preferably between about 0.25 and about 0.75% by weight, and most preferably between about 0.4 and about 0.6% by weight of the hot melt adhesive composition. Typical anti-oxidants are commercially available under the trademark IRGANOX^{®} and IRGAFOS^{®} both commercially available from BASF.

The hot melt adhesive composition of the present invention may also comprise a supplemental plasticizer, which is a plasticizer other than the plasticizer having at least one ester linkage described herein. If used, a supplemental plasticizer serves to provide additional desired viscosity control and to impart more flexibility. A suitable supplemental plasticizer may be selected from the group which includes the usual plasticizing oils, such as mineral oil, but also olefin oligomers and low molecular weight polymers other than the low molecular weight plasticizers having at least one ester linkage as described herein, as well as vegetable and animal oils and derivatives thereof. As will be appreciated, plasticizers have typically been used to lower the viscosity of the overall adhesive composition without substantially decreasing the adhesive strength and/or the service temperature of the adhesive as well as to extend the open time and to improve flexibility of the adhesive.

The hot melt adhesive composition of the present invention may also comprise a compatible tackifying resin or tackifier, which extend adhesive properties and improve specific adhesion.

It should be understood that other optional additives may be incorporated into the hot melt adhesive composition of the present invention in order to modify particular physical properties. These optional additives may include, for example, such materials as ultraviolet light (UV) absorbers, waxes, surfactants, inert colorants, titanium dioxide, fluorescing agents and fillers. Typical fillers include talc, calcium carbonate, clay silica, mica, wollastonite, feldspar, aluminum silicate, alumina, hydrated alumina, glass microspheres, ceramic microspheres, thermoplastic microspheres, baryte and wood flour and may be included in an amount up to 40% by weight, and preferably between 1 and 30% by weight. In an embodiment of the invention, the hot melt adhesive composition comprises, consists essentially of, or consists of a (co)polyester resin component and a plasticizer having at least one ester linkage, a wax, a tackifier, and, optionally, an antioxidant. Preferably, any additional additives do not inhibit the adhesive's ability to be compostable.

In embodiments of the invention, the (co)polyester resin component comprises a functionalized (preferably sulphonated) copolyester resin and/or a non-functionalized copolyester resin. As used herein, the term "non-functionalized" means that the resin does contain any groups that would polymerize or otherwise react upon application of heat, uv-curing, application of moisture, and/or catalysis. In other embodiments, the composition does not contain any sulphonated copolyester resins, or less than about 5 wt%, more preferably less than about 3 wt%, and most preferably less than about 1 wt% of a sulphonated copolyester resin based on the weight of the hot melt adhesive composition. In still other embodiments, the (co)polyester resin component comprises a non-functionalized copolyester resin and the composition does not contain any sulphonated copolyester resins.

Preferably, the adhesive of the present invention is compostable. As used herein, the term "compostable" as applied to an adhesive is an adhesive which meets the requirements of either: (1) the Disintegration Testing as defined by ASTM D 6400-12 (using ISO 20200) (84 day compost exposure) or (2) the Aerobic Biodegradation as defined by ASTM D 6400-12 (using ASTM 5338-15) (at 58±2°C at 141 days). In other words, the adhesive will reach a minimum of 90% weight loss within 84 days under the Disintegration Testing conditions or will have reached at least 90% carbon conversion (based on CO₂ production) within 141 days according to the Aerobic Biodegradation testing, described in more detail in the examples. In preferred embodiments, the adhesive meets the requirements of both: (1) the Disintegration Testing as defined by ASTM D 6400-12 (using ISO 20200) (84 day compost exposure) and (2) the Aerobic Biodegradation as defined by ASTM D 6400-12 (using ASTM 5338-15) (at 58±2°C at 141 days).

There is no particular order in making an adhesive composition of the present invention, and it may be made using conventional process steps. The adhesive may be made by heating and mixing the various constituents under nitrogen, for example by using a kneader heated to about 325°F. The (co)polyester resins may be mixed first and then the plasticizer having at least one ester linkage and an antioxidant and other additives (if used) may be blended in.

Hot melt adhesives according to the present invention may be suitable for use to spray-coat a nonwoven substrate, including a compostable nonwoven substrate, and to serve as a construction adhesive in a disposable hygiene article. In an embodiment of the invention, a method of making a laminate comprises the steps of: (1) applying the hot melt adhesive composition according to any embodiments of the invention in a molten state to a primary substrate; and (2) mating a secondary substrate to the first substrate by contacting the secondary substrate with the adhesive composition. The primary substrate may be a nonwoven substrate, including a compostable nonwoven substrate. The secondary substrate may be a back sheet of a disposable hygiene product, which also may be compostable. The laminate formed by these methods may be a laminate used in a disposable hygiene product, such as baby diapers or adult incontinence products.

For many applications, hot melt adhesives are often extruded directly onto a substrate in the form of a thin film or a bead by using piston or gear pump equipment. In this case, the substrate, preferably a compostable substrate, is brought into intimate contact with a hot die under pressure. The temperature of the die must be maintained well above the melting point of the adhesive to allow the molten hot melt material to flow through the application nozzle smoothly. For most applications, particularly those encountered in food packaging and disposable nonwovens hygienic article manufacturing, bonding of delicate and heat sensitive substrates, such as thin gauge plastic films, is often involved. This imposes an upper limit on coating temperature for hot melt adhesive applications. Today's commercial hot melts are typically formulated to have coating temperatures below 200°C, preferably below 150°C, to avoid substrate burning or distortion. As substrates become thinner or are made of new thermally sensitive materials it is even more imperative to minimize the application temperature of the adhesive.

Besides directly coating, several indirect or noncontact coating methods, through which a hot melt adhesive can be spray coated with the aid of heated, compressed air onto a substrate from a distance, are also developed. These non-contact coating techniques include conventional spiral spray, OmegaTM, SurewrapTM , Allegro^{™} and various forms of melt-blown methods. The indirect method, however, requires that the viscosity of the adhesives must be sufficiently low, usually in the range of 2,000 to 35,000 mPa.s, preferably in the range of 2,000 to 30,000 mPa.s, more preferably in the range of 5,000 mP.s to 25,000 mP.s, at the application temperature in order to obtain an acceptable coating pattern. Typical application temperatures are between 250°F to 350°F, most typically 300°F. Many other physical factors, especially the rheological properties of the adhesive, come into play in determining the sprayability of a hot melt. Embodiments of the invention have been found to achieve acceptable peel force for use as a construction adhesive even while having an acceptably low viscosity to be applied by spraying at a temperature as low as 300°F.

The adhesive composition of the present invention may also be used as a general purpose hot melt adhesive in a number of applications such as, for example, in disposable nonwoven hygienic articles, paper converting, flexible packaging, wood working, carton and case sealing, labeling and other assembly applications. In a preferred embodiment, the hot melt adhesive of the present invention is used as a construction adhesive in a disposable nonwoven hygiene product.

### ASPECTS OF THE INVENTION

Certain aspects of the invention are set forth below.
Aspect 1. A hot melt adhesive composition comprising:
   a (co)polyester resin component either: (1) having an essentially amorphous domain and a crystalline domain or (2) comprising a blend of at least one essentially amorphous (co)polyester resin and at least one semicrystalline or crystalline (co)polyester resin; and
   a plasticizer having at least one ester linkage,
   wherein the composition has:
      a Tg (ASTM E1356-08) less than about 10°C (preferably between about
         -50°C and about 0°C, more preferably between about -40°C and about
         -7.5°C, and most preferably between about -30°C and about -10°C);
      a DSC melt temperature (Tₘ ASTM D3418-21, first heat) of between about 20°C and about 80°C (preferably in the range of about 25°C and about 70°C, and most preferably in the range of about 30°C and about 60°C);
      an intrinsic viscosity (ASTM D5225-14, using a 60/40 blend of phenol and tetrachloroethane at a temperature of 30°C) between about 0.3 dl/g and about 0.8 dl/g (preferably in the range of about 0.35 and about 0.5 dl/g, and most preferably in the range of about 0.4 and about 0.5 dl/g); and
      a melt (Brookfield) viscosity of between about 2,000 and about 50,000 cP (preferably about 3,000 and about 40,000 cP, more preferably about 5,000 and about 30,000 cP) at 300°F in accordance with ASTM method D3236-15.
Aspect 2. The hot melt adhesive composition of aspect 1, wherein the (co)polyester resin component has a Tg of between about -10°C and about 58°C, preferably between about -5°C and about 30°C, more preferably between about 0°C and about 20°C and most preferably between about 0°C and about 15 °C.
Aspect 3. The hot melt adhesive composition of aspects 1 or 2, wherein the (co)polyester resin component has:
   i) a ring & ball (R&B) softening point value of between about 35°C and about 140°C (preferably in the range of about 45°C and about 120°C; and most preferably in the range of about 50°C and about 100°C); and
   ii) an intrinsic viscosity in accordance with ASTM D5225-14, using a 60/40 blend of phenol and tetrachloroethane at a temperature of 30°C, between about 0.35 dl/g and about 0.65 dl/g (preferably in the range of about 0.4 and about 0.6 dl/g, and most preferably in the range of about 0.45 and about 0.55 dl/g).
Aspect 4. The hot melt adhesive composition of any of aspects 1-3, wherein the composition has an R&B softening point of between about 50°C and about 120°C (preferably, between about 55°C and about 105°C, and more preferably between about 60°C and about 80°C).
Aspect 5. The hot melt adhesive composition of any of aspects 1-4, wherein the plasticizer having at least one ester linkage has a molecular weight of at most about 25,000 g/mol (preferably at most about 20,000 g/mol, more preferably at most about 20,000 g/mol, and even more preferably at most about 15,000 g/mol, and preferably at least about 100 g/mol, more preferably at least about 200 g/mol, and most preferably at least about 250 g/mol).
Aspect 6. The hot melt adhesive composition of any of aspects 1-5, wherein the (co)polyester resin component comprises the blend of the at least one essentially amorphous (co)polyester resin and the at least one semicrystalline or crystalline (co)polyester resin, and the at least one semicrystalline or crystalline (co)polyester resin comprises a semicrystalline copolyester resin having:
   a) a Tg of at most about 0°C (preferably, at most about -5°C, and more preferably at most about -10°C);
   b) a degree of crystallinity of between about 5 % and about 30 % as determined by DSC; and
   c) an intrinsic viscosity of between about 0.8 dl/g and about 1.3 dl/g (preferably between about 0.85 dl/g and about 1.2 dl/g, more preferably between about 0.87 dl/g and about 1.15 dl/g).
Aspect 7. The hot melt adhesive composition of any of aspects 1-6, wherein comprises:
   a) the at least one essentially amorphous (co)polyester resin comprises an essentially amorphous copolyester resin having a Tg of at least 0°C (preferably, at least about 25°C, more preferably, between about 30°C and about 90°C, and most preferably between about 40°C and about 80°C) and an intrinsic viscosity of between about 0.35 dl/g and about 1 dl/g (preferably between about 0.4 dl/g and about 0.8 dl/g, and most preferably between about 0.45 dl/g and about 0.75 dl/g); and
   b) the plasticizer having at least one ester linkage comprises a small molecule plasticizer and an essentially amorphous copolyester plasticizer having a Tg of at least 0°C (preferably, at least about 25°C, more preferably between about 30°C and about 60°C, and most preferably between about 35°C and about 55°C) and an intrinsic viscosity of between about 0.1 dl/g and about 0.3 dl/g (preferably between about 0.12 dl/g and about 0.25 dl/g, and most preferably between about 0.15 dl/g and about 0.2 dl/g).
Aspect 8. The hot melt adhesive composition of aspect 7, wherein:
   c) the semicrystalline copolyester resin has an R&B softening point of between about 80°C and about 130°C (preferably, between about 95°C and about 125°C, and most preferably between about 105°C and about 120°C);
   d) the essentially amorphous copolyester resin has an R&B softening point of between about 85°C and about 180°C (preferably, between about 90°C and about 170°C, and most preferably between about 100°C and about 165°C); and
   e) the essentially amorphous copolyester plasticizer has an R&B softening point of between about 70°C and about 130°C (preferably, between about 85°C and about 120°C, and most preferably between about 90°C and about 115°C).
Aspect 9. The hot melt adhesive composition of aspects 7 or 8, wherein:
   a) the semicrystalline copolyester resin has a weight average molecular weight between about 70,000 g/mol and about 150,000 g/mol (preferably between about 75,000 g/mol and about 125,000 g/mol, and most preferably between about 80,000 g/mol and about 120,000 g/mol);
   b) the essentially amorphous copolyester resin has a weight average molecular weight between about 15,000 g/mol and about 100,000 g/mol (preferably between about 25,000 g/mol and about 80,000 g/mol, and most preferably between about 30,000 g/mol and about 70,000 g/mol); and
   c) the essentially amorphous copolyester plasticizer has a weight average molecular weight between about 2,000 g/mol and about 25,000 g/mol (preferably between about 4,000 g/mol and about 20,000 g/mol, and most preferably between about 5,000 g/mol and about 15,000 g/mol).
Aspect 10. The hot melt adhesive composition of any of aspects of 7-9, wherein:
   a) the semicrystalline copolyester resin has a polydispersity index (PDI) of between about 1.5 to about 3.5 (preferably between about 1.7 and about 3, and more preferably between about 1.8 and about 2.5);
   b) the essentially amorphous copolyester resin has a PDI of between about 1.5 and about 3.5 (preferably between about 1.7 and about 3, and more preferably between about 1.8 and about 2.5); and
   c) the essentially amorphous copolyester plasticizer has a PDI of between about 2 and about 5 (preferably between about 2.3 and about 4, and more preferably between about 2.5 and about 3.5).
Aspect 11. The hot melt adhesive composition of any of aspects 7-10, wherein:
   a) the semicrystalline copolyester resin comprises residues of at least one aliphatic diacid or diester and at least one aromatic diacid or diester and residues of at least one aliphatic diol;
   b) the essentially amorphous copolyester resin comprises residues of at least one aliphatic diol, residues of at least one aromatic diacid or diester, and, optionally, residues of at least one aliphatic diacid or diester;
   c) the essentially amorphous copolyester plasticizer comprises residues of at least one aliphatic diacid or diester and at least one aromatic diacid or diester and residues of at least one of: (i) at least one aliphatic diol and (ii) at least one aliphatic triol.
Aspect 12. The hot melt adhesive composition of any of aspects 7-11, wherein:
   a) the semicrystalline copolyester resin has an aromatic diacid or diester:total diacid or diester fraction of at most about 0.65 (preferably at most about 0.55, and most preferably at most about 0.45);
   b) the essentially amorphous copolyester resin has an aromatic diacid or diester:total diacid or diester fraction of at least about 0.5 (preferably at least about 0.7, and most preferably at least about 0.8); and
   c) the essentially amorphous copolyester plasticizer has an aromatic diacid or diester:total diacid fraction of at least about 0.8 (preferably at least about 0.9, and most preferably at least about 1).
Aspect 13. The hot melt adhesive composition of any of aspects 7-12, wherein:
   a) the semicrystalline copolyester resin is present in an amount of between about 10 wt% and about 60 wt% (preferably between about 15 wt% and about 50 wt%, more preferably between about 20 wt% and about 45 wt%);
   b) the essentially amorphous copolyester resin is present in an amount of between about 2 wt% and about 30 wt% (preferably between about 5 wt% and about 25 wt%, more preferably between about 7 wt% and about 20 wt%); and
   c) the essentially amorphous copolyester plasticizer is present in an amount of between about 15 wt% and about 70 wt% (preferably between about 25 wt% and about 60 wt%, more preferably between about 30 wt% and about 55 wt%);
   d) the small molecule plasticizer having a least one ester linkage is present in an amount of between about 5 wt% and about 40 wt% (preferably between about 7 wt% and about 35 wt%, more preferably between about 10 wt% and about 30 wt%).
Aspect 14. The hot melt adhesive composition of any of aspects 7-13, wherein the weight ratio of the at least one semicrystalline copolyester resin to the essentially amorphous copolyester resin component is between about 2:1 and about 4:1 (preferably between about 5:2 and about 7:2, and most preferably between about 8:3 and about 10:3).
Aspect 15. The hot melt adhesive of any of aspects 1-5, wherein: the (co)polyester resin component comprises the blend of the at least one essentially amorphous (co)polyester resin and the at least one semicrystalline or crystalline (co)polyester; and:
   a) the plasticizer having a least one ester linkage comprises a semicrystalline copolyester plasticizer having a Tg of at most about 35°C and at least about 10°C (preferably, at most about 30°C, and more preferably at most about 28°C); a degree of crystallinity of between about 5% and about 30% as determined by DSC; and a weight average molecular weight between about 2,000 g/mol and about 25,000 g/mol (preferably between about 4,000 g/mol and about 20,000 g/mol, and most preferably between about 5,000 g/mol and about 15,000 g/mol);
   b) the at least one semicrystalline or crystalline (co)polyester resin comprises a semicrystalline copolyester resin having a Tg of at most about 0°C (preferably, at most about -5°C, and more preferably at most about -10°C); a degree of crystallinity of between about 5% and about 30% as determined by DSC; and a weight average molecular weight between about 70,000 g/mol and about 150,000 g/mol (preferably between about 75,000 g/mol and about 125,000 g/mol, and most preferably between about 80,000 g/mol and about 120,000 g/mol); and
   c) the at least one essentially amorphous (co)polyester resin comprises an essentially amorphous copolyester resin having a Tg of at least 0°C (preferably, at least about 25°C, more preferably, between about 30°C and about 90°C, and most preferably between about 40°C and about 80°C) and a weight average molecular weight between about 15,000 g/mol and about 100,000 g/mol (preferably between about 25,000 g/mol and about 80,000 g/mol, and most preferably between about 30,000 g/mol and about 70,000 g/mol).
Aspect 16. The hot melt adhesive of any of aspects 1-5, wherein: the (co)polyester resin component comprises the blend of the at least one essentially amorphous (co)polyester resin and the at least one semicrystalline or crystalline (co)polyester; and :
   a) the at least one semicrystalline or crystalline (co)polyester comprises a semicrystalline copolyester resin having a Tg of at most about 0°C (preferably, at most about -5°C, and more preferably at most about -10°C); a degree of crystallinity of between about 5% and about 30% as determined by DSC; and a weight average molecular weight between about 70,000 g/mol and about 150,000 g/mol (preferably between about 75,000 g/mol and about 125,000 g/mol, and most preferably between about 80,000 g/mol and about 120,000 g/mol);
   b) the plasticizer having a least one ester linkage comprises a small molecule plasticizer and an essentially amorphous copolyester plasticizer having a Tg of at least 0°C (preferably, at least about 25°C, more preferably, between about 30°C and about 90°C, and most preferably between about 40°C and about 70°C) and a weight average molecular weight between about 2,000 g/mol and about 25,000 g/mol (preferably between about 4,000 g/mol and about 15,000 g/mol, and most preferably between about 5,000 g/mol and about 10,000 g/mol); and
   c) the at least one essentially amorphous (co)polyester resin comprises an essentially amorphous copolyester resin having a Tg of at least 0°C (preferably, at least about 25°C, more preferably, between about 30°C and about 90°C, and most preferably between about 40°C and about 80°C) and a weight average molecular weight between about 15,000 g/mol and about 100,000 g/mol (preferably between about 25,000 g/mol and about 80,000 g/mol, and most preferably between about 30,000 g/mol and about 70,000 g/mol).
Aspect 17. The hot melt adhesive composition of aspects 15 or 16, wherein:
   a) the at least one semicrystalline (co)copolyester resin is present in an amount of between about 10 wt% and about 60 wt% (preferably between about 15 wt% and about 50 wt%, more preferably between about 20 wt% and about 45 wt%);
   b) the at least one essentially amorphous (co)polyester resin is present in an amount of between about 3 wt% and about 25 wt% (preferably between about 5 wt% and about 20 wt%, more preferably between about 7 wt% and about 15 wt%); and
   c) the plasticizer having at least one ester linkage is present in an amount of between about 25 wt% and about 75 wt% (preferably between about 35 wt% and about 70 wt%, more preferably between about 45 wt% and about 65 wt%).
Aspect 18. The hot melt adhesive composition of any of aspects 7-14, 16, or 17, wherein the small molecule plasticizer has a molecular weight 5,000 g/mole, preferably at most about 2,000 g/mol, and even more preferably at most about 1,500 g/mol, and most preferably at most about 1,000 g/mol, and preferably at least about 100 g/mol, more preferably at least about 200 g/mol, and most preferably at least about 250 g/mol.
Aspect 19. The hot melt adhesive composition of any of aspects 1-5, wherein the (co)polyester resin component comprises the blend of the at least one essentially amorphous (co)polyester resin and the at least one semicrystalline or crystalline (co)polyester resin, and the at least one essentially amorphous (co)polyester resin component comprises a branched essentially amorphous copolyester resin and a linear essentially amorphous copolyester resin.
Aspect 20. The hot melt adhesive composition of aspect 19, wherein the branched essentially amorphous copolyester resin comprises the residues of at least one diol and at least one triol, wherein the at least one triol is present in an amount of at least about 0.5 mol% (preferably at least about 1 mol%, more preferably at least about 2 mol%) based on the total number of moles of the at least one diol and the at least one triol.
Aspect 21. The hot melt adhesive composition of any of aspects 1-5, wherein the (co)polyester resin component has the essentially amorphous domain and the crystalline domain.
Aspect 22. The hot melt adhesive composition of any of aspects 1-21 further comprising a wax, a tackifier, and a supplemental plasticizer.
Aspect 23. The hot melt adhesive composition of any of aspects 1-22 further comprising an antioxidant.
Aspect 24. The hot melt adhesive composition of any of aspects 1-23, wherein the (co)polyester resin component comprises a functionalized (preferably sulphonated) copolyester resin.
Aspect 25. The hot melt adhesive composition of any of aspects 1-24, wherein the (co)polyester resin component comprises a non-functionalized copolyester resin and the composition does not contain any sulphonated copolyester resins.
Aspect 26. The hot melt adhesive composition of any of aspects 1-25, wherein the (co)polyester resin component and the plasticizer having at least one ester linkage are present in amounts effective to provide a maximum peel strength of at least 150 g-f/inch at 3 gsm.
Aspect 27. The hot melt adhesive composition of any of aspects 1-26, wherein the adhesive composition is compostable.
Aspect 28. A method of making a laminate comprising the steps of:
   applying the hot melt adhesive composition of any of aspects 1-27 in a molten state to a primary substrate; and
   mating a secondary substrate to the primary substrate by contacting the secondary substrate with the adhesive composition.
Aspect 29. The method of aspect 28, wherein the applying step comprises spraying the hot melt adhesive onto the primary substrate.
Aspect 30. The method of aspect 28 or 29, wherein the spraying occurs at a temperature of between about 300°F to about 350°F and the viscosity of the hot melt adhesive during the applying step is between about 2,000 and about 30,000 mPa.s, preferably between about 2,000 and about 15,000 mPa.s.
Aspect 31. The method of any of aspects 28-30, wherein the primary substrate is a compostable nonwoven substrate.
Aspect 32. The laminate formed by the method of any of aspects 28-31 used in a disposable hygiene product.

### EXAMPLES

The invention is further illustrated by way of the examples which are set forth below.

Adhesive formulations having the constituents in weight percentages (based on the total weight of the formulation) shown in Tables 3-9 below, corresponding to Examples 1-5 of the invention and Comparative Examples 1 and 2, were made using a kneader at 338°F. The speed of the blades of the kneader was set between 50 to 100 rpm. Vitel^{®} 2200B (and/or 2700B-LMW, 2200LV) was added to the kneader in small quantities under vacuum. After 20 minutes of kneading, Vitel^{®} 5833B (if present) and the antioxidant or antioxidant package was added and allowed to blend for 30 minutes under vacuum. The kneader was filled with nitrogen and Vitel^{®} 1801 (and 1801LV, if present) was then added and blended in the kneader for another 30 minutes. Half of the non-Vitel^{®} grade plasticizers having at least one ester linkage (either Citroflex A4, Hallgreen R9010, or Stepanpol BC-180) was added to the kneader and blended under nitrogen. The rest of the small molecule plasticizer having at least one ester linkage was added and allowed to continue blending under nitrogen for an hour.

**Table 3 (Example 1)**

| | wt% |
|---|---|
| Vitel 2200B | 11 |
| Vitel 1801 | 31 |
| Vitel 5833B | 39 |
| Citroflex A4 | 18 |
| Antioxidant | 1 |
| | 100 |

**Table 4 (Example 2)**

| | wt% |
|---|---|
| Vitel 2700B-LMW | 11 |
| Vitel 1801 | 31 |
| Vitel 5833B | 39 |
| Citroflex A4 | 18 |
| Antioxidant | 1 |
| | 100 |

**Table 5 (Example 3)**

| | wt% |
|---|---|
| Vitel 2200B | 12 |
| Vitel 1801 | 32 |
| Vitel 5833B | 40 |
| Hallgreen R9010 | 15 |
| Antioxidant | 1 |
| | 100 |

**Table 6 (Example 4)**

| | wt% |
|---|---|
| Vitel 1801LV | 57 |
| Vitel 1801 | 31 |
| Vitel 2200B | 11 |
| Antioxidant | 1 |
| | 100 |

**Table 7 (Example 5)**

| | wt% |
|---|---|
| Vitel 2200LV | 40 |
| Vitel 1801 | 32 |
| Vitel 2200B | 12 |
| Citroflex A4 | 15 |
| Antioxidant | 1 |
| | 100 |

**Table 8 (Comparative Example 1)**

| | wt% |
|---|---|
| Vitel 2700BLMW | 37 |
| Vitel 5833B | 27.4 |
| Stepanpol BC-180 | 34.25 |
| Antioxidant | 1.35 |
| | 100 |

**Table 9 (Comparative Example 2)**

| | wt% |
|---|---|
| Vitel 2700B-LMW | 36.99 |
| Vitel 5833B | 27.4 |
| Hallgreen R9010 | 34.25 |
| Antioxidant | 1.36 |
| | 100 |

All Vitel^{®} grades are copolyester resins or plasticizers commercially available from the assignee hereof and have the properties shown above in Tables 1 and 2. Vitel^{®} 1801 resin and 1801LV plasticizer are semicrystalline copolyesters having a degree of crystallinity of between 5% and 30%. The other Vitel^{®} resins or plasticizers used in the examples are essentially amorphous. Citroflex^{®} A4 citric acid ester and Hallgreen^{®} R-9010 monomeric ester are described above and are small molecule plasticizers having at least one ester linkage, and Stepanpol^{®} polyester polyol is a polyester plasticizer having at least one ester linkage. The antioxidant used was a grade of Irganox or a blend of several Irganox^{®} and Irgafos^{®} grades, such as Irganox^{®} 1010, which is a hindered phenol antioxidant commercially available from BASF Corporation.

Given the above descriptions, it can be appreciated that Examples 1-5 contain a (co)polyester resin component having an essentially amorphous copolyester resin and a semicrystalline copolyester resin, with the essentially amorphous resin provided by Vitel^{®} 2200B or Vitel^{®} 2700B, and the semicrystalline or crystalline resin provided by Vitel^{®} 1801 copolyester resin. The mixture of the copolyester resins of Example 1 to 3 had Tg values of -20°C to 60°C, Ring&Ball softening point (RBSP) values ranging from 85°C to 132°C, and intrinsic viscosities (ASTM D5225-14, using a 60/40 blend of phenol and tetrachloroethane at a temperature of 30°C) between 0.4 dl/g to 0.55 dl/g. Table 10 below provides various properties of the hot melt adhesive compositions of Examples 1-5.

**Table 10**

| Example | Viscosity @ 300 deg F, 30 min, cP | Ring&Ball softening point (°C) | Intrinsic viscosity (I-V) (dL/g) | Tg (deg C), 2^{nd} heat, DSC | Tm (deg C), 1^{st} heat, DSC | Melt enthalpy (J/g) |
|---|---|---|---|---|---|---|
| 1 | 19500 | 76 | 0.41 | -18.6 | 34, 53 | 2.8 |
| 2 | 20400 | 63 | 0.41 | -23 | 34, 52 | 2.8 |
| 3 | 27400 | 74 | 0.43 | -9.5 | 34 | 3.7 |
| 4 | 20425 | 108 | 0.40 | -20 | 38, 39, 49, 77 | 24.8 |
| 5 | 19500 | 71 | 0.40 | -13 | 34 | 1 |

Comparative Examples 1 and 2 do not contain a (co)polyester resin not functioning primarily as a plasticizer and having any crystalline domain, such as would be present in a semicrystalline or crystalline (co)polyester resin. The copolyester resins used in Comparative Examples 1 and 2 are both essentially amorphous.

The adhesive formulations of Examples 1-5 and Comparative Examples 1 and 2 were sprayed onto a substrate using a Signature^{®} applicator, commercially available from Nordson, using an Acumeter Laboratories LH-1 benchtop coater at a line speed of 158 feet per minute to achieve an add-on of 3 grams per square meter (gsm). The application temperature used for coating varied between 315°F and 345°F to achieve a well-fiberized spray pattern. Laminates were formed at the nip roll, when the adhesive coated primary substrate joined with the secondary substrate. Typical open time for the process was 0.3 seconds. Peel performance of the laminates were tested using an Instron rate of 12 inches per minute. For each formulation, six laminates were tested and the average maximum load obtained from the instrument is recorded. Mean and confidence intervals were calculated for each formulation and summarized in Figure 1. Substrate destruction was observed above 300 grams-force and severe substrate distortion was observed above 200 grams-force.

Fig. 1 shows the results in the form of an interval plot of the average maximum load achieved by laminates made using inventive adhesive formulations according to Examples 1-5 and formulations according to Comparative Examples 1 and 2. As can be seen, the highest peel strength of the Comparative Examples was about 130 grams-force, whereas the lowest peel strength of inventive Examples 1-5 was about 155 grams-force, with three of the inventive formulations having values above 200 grams-force. Therefore, these examples demonstrate formulations of the invention which have a viscosity at a typical application temperature (300°F) and a peel strength suitable for use in a number of construction adhesive applications.

Samples were prepared of Example 1 and Example 2 for the Disintegration Testing as defined by ASTM D 6400-12 (using ISO 20200). Each formulation was slot coated at 40 gsm onto a release to release paper liner (i.e., both the primary and a secondary substrates were paper release liner). The thin film of adhesive was carefully removed from the first-coated release liner and introduced into a container of 100 grams of pre-made compost. In total, one gram of adhesive film only was added to the compost container. Water is added to the sealed containers throughout the testing to maintain a minimum of 50% moisture content. Duplicates were run for consistency. Both formulations tested were found to have passed the test after 84 days or sooner. It is believed that embodiments of the invention will also pass the Aerobic Biodegradation test as defined by ASTM D 6400-12 (using ASTM 5338-15) (at 58±2°C at 141 days).

Unless otherwise stated herein, where a range of values or upper or lower limits of values are provided, it is understood that each intervening value, and any combination or sub-combination of intervening values, between the upper and lower limit of that range and any other stated or intervening value in that stated range, is encompassed within the range of values recited. In addition, the invention includes all ranges of such values from any lower limit to any upper limit provided either independently or as part of a stated range.

Unless defined otherwise, all technical and scientific terms used herein have the same meanings as commonly understood by one of ordinary skill in the art to which this invention belongs. All publications and patents specifically mentioned herein are incorporated by reference in their entirety for all purposes including describing and disclosing the chemicals, instruments, statistical analyses and methodologies which are reported in the publications which might be used in connection with the invention. All references cited in this specification are to be taken as indicative of the level of skill in the art. Nothing herein is to be construed as an admission that the invention is not entitled to antedate such disclosure by virtue or prior invention.

Although illustrated and described herein with reference to certain specific embodiments, the present invention is nevertheless not intended to be limited to the details shown. Rather, various modifications may be made in the details within the scope and range of equivalents of the claims and without departing from the spirit of the invention.

## Claims

1. A hot melt adhesive composition comprising:
a (co)polyester resin component either: (1) having an essentially amorphous domain and a crystalline domain or (2) comprising a blend of at least one essentially amorphous (co)polyester resin and at least one semicrystalline or crystalline (co)polyester resin; and
a plasticizer having at least one ester linkage,
wherein the composition has:
a Tg less than about 10°C (preferably between about
- 50°C and about 0°C, more preferably between about -40°C and about
- 7.5°C, and most preferably between about -30°C and about -10°C);
a DSC melt temperature of between about 20°C and about 80°C (preferably in the range of about 25°C and about 70°C, and most preferably in the range of about 30°C and about 60°C);
an intrinsic viscosity between about 0.3 dl/g and about 0.8 dl/g (preferably in the range of about 0.35 and about 0.5 dl/g, and most preferably in the range of about 0.35 and about 0.45 dl/g); and
a melt viscosity of between about 2,000 and about 50,000 cP (preferably about 3,000 and about 40,000 cP, more preferably about 5,000 and about 30,000 cP) at 300°F.

2. The hot melt adhesive composition of claim 1, wherein the (co)polyester resin component has a Tg of between about -10°C and about 58°C, preferably between about -5C and about 30°C, more preferably between about 0°C and about 20°C and most preferably between about 0°C and about 15 °C.

3. The hot melt adhesive composition of claims 1 or 2, wherein the (co)polyester resin component has:
i) a ring & ball (R&B) softening point value of between about 35°C and about 140°C (preferably in the range of about 45°C and about 120°C; and most preferably in the range of about 50°C and about 100°C); and
ii) an intrinsic viscosity between about 0.35 dl/g and about 0.65 dl/g (preferably in the range of about 0.4 and about 0.6 dl/g, and most preferably in the range of about 0.45 and about 0.55 dl/g).

4. The hot melt adhesive composition of any of claims 1-3, wherein the composition has an R&B softening point of between about 50°C and about 120°C (preferably, between about 55°C and about 105°C, and more preferably between about 60°C and about 80°C).

5. The hot melt adhesive composition of any of claims 1-4, wherein the plasticizer having at least one ester linkage has a molecular weight of at most about 25,000 g/mol (preferably at most about 20,000 g/mol, more preferably at most about 15,000 g/mol, and preferably at least about 100 g/mol, more preferably at least about 200 g/mol, and most preferably at least about 250 g/mol).

6. The hot melt adhesive composition of any of claims 1-5, wherein the (co)polyester resin component comprises the blend of the at least one essentially amorphous (co)polyester resin and the at least one semicrystalline or crystalline (co)polyester resin, and the at least one semicrystalline or crystalline (co)polyester resin comprises a semicrystalline copolyester resin having:
a) a Tg of at most about 0°C (preferably, at most about -5°C, and more preferably at most about -10°C);
b) a degree of crystallinity of between about 5 % and about 30 % as determined by DSC; and
c) an intrinsic viscosity of between about 0.8 dl/g and about 1.3 dl/g (preferably between about 0.85 dl/g and about 1.2 dl/g, more preferably between about 0.87 dl/g and about 1.15 dl/g).

7. The hot melt adhesive composition of claim 6, wherein:
a) the at least one essentially amorphous (co)polyester resin comprises an essentially amorphous copolyester resin having a Tg of at least 0°C (preferably, at least about 25°C, more preferably, between about 30°C and about 90°C, and most preferably between about 40°C and about 80°C) and an intrinsic viscosity of between about 0.35 dl/g and about 1 dl/g (preferably between about 0.4 dl/g and about 0.8 dl/g, and most preferably between about 0.45 dl/g and about 0.75 dl/g); and
b) the plasticizer having at least one ester linkage comprises a small molecule plasticizer and an essentially amorphous copolyester plasticizer having a Tg of at least 0°C (preferably, at least about 25°C, more preferably between about 30°C and about 60°C, and most preferably between about 35°C and about 55°C) and an intrinsic viscosity of between about 0.1 dl/g and about 0.3 dl/g (preferably between about 0.12 dl/g and about 0.25 dl/g, and most preferably between about 0.15 dl/g and about 0.2 dl/g).

8. The hot melt adhesive composition of claim 7, wherein:
a) the semicrystalline copolyester resin has a weight average molecular weight between about 70,000 g/mol and about 150,000 g/mol (preferably between about 75,000 g/mol and about 125,000 g/mol, and most preferably between about 80,000 g/mol and about 120,000 g/mol);
b) the essentially amorphous copolyester resin has a weight average molecular weight between about 15,000 g/mol and about 100,000 g/mol (preferably between about 25,000 g/mol and about 80,000 g/mol, and most preferably between about 30,000 g/mol and about 70,000 g/mol); and
c) the essentially amorphous copolyester plasticizer has a weight average molecular weight between about 2,000 g/mol and about 25,000 g/mol (preferably between about 4,000 g/mol and about 20,000 g/mol, and most preferably between about 5,000 g/mol and about 15,000 g/mol).

9. The hot melt adhesive composition of any of claims 6-8, wherein the weight ratio of the at least one semicrystalline or crystalline (co)polyester resin to the essentially amorphous (co)polyester resin component is between about 2:1 and about 4:1 (preferably between about 5:2 and about 7:2, and most preferably between about 8:3 and about 10:3).

10. The hot melt adhesive composition of any of claims 1-5, wherein the (co)polyester resin component comprises the blend of the at least one essentially amorphous (co)polyester resin and the at least one semicrystalline or crystalline (co)polyester resin, and the at least one essentially amorphous copolyester resin component comprises a branched essentially amorphous copolyester resin and a linear essentially amorphous copolyester resin.

11. The hot melt adhesive composition of any of claims 7-9, wherein:
a) the semicrystalline copolyester resin comprises residues of at least one aliphatic diacid or diester and at least one aromatic diacid or diester and residues of at least one aliphatic diol;
b) the essentially amorphous copolyester resin comprises residues of at least one aliphatic diol, residues of at least one aromatic diacid or diester, and, optionally, residues of at least one aliphatic diacid or diester;
c) the essentially amorphous copolyester plasticizer comprises residues of at least one aliphatic diacid or diester and at least one aromatic diacid or diester and residues of at least one of: (i) at least one aliphatic diol and (ii) at least one aliphatic triol.

12. The hot melt adhesive composition of any of claims 7-9 and 11, wherein:
a) the semicrystalline copolyester resin is present in an amount of between about 10 wt% and about 60 wt% (preferably between about 15 wt% and about 50 wt%, more preferably between about 20 wt% and about 45 wt%);
b) the essentially amorphous copolyester resin is present in an amount of between about 2 wt% and about 30 wt% (preferably between about 5 wt% and about 25 wt%, more preferably between about 7 wt% and about 20 wt%);
c) the essentially amorphous copolyester plasticizer is present in an amount of between about 15 wt% and about 70 wt% (preferably between about 25 wt% and about 60 wt%, more preferably between about 30 wt% and about 55 wt%); and
d) the small molecule plasticizer having at least one ester linkage is present in an amount of between about 5 wt% and about 40 wt% (preferably between about 7 wt% and about 35 wt%, more preferably between about 10 wt% and about 30 wt%).

13. The hot melt adhesive composition of any of claims 1-12, wherein the adhesive composition is compostable.

14. A method of making a laminate comprising the steps of:
applying the hot melt adhesive composition of any of claims 1-13 in a molten state to a primary substrate; and
mating a secondary substrate to the primary substrate by contacting the secondary substrate with the adhesive composition.

15. The laminate formed by the method of claim 14 used in a disposable hygiene product.
